# EUROPÄISCHE PATENTSCHRIFT

(11) **EP 3 862 658 B1**
(45) Veröffentlichungstag und Bekanntmachung des Hinweises auf die Patenterteilung: **02.07.2025**
(21) Anmeldenummer: 20155864.0
(22) Anmeldetag: 06.02.2020
(51) Int. Cl.: F25B 21/00, F25B 23/00, F25B 25/00

(54) **VERFAHREN ZUR STABILISIERUNG UND/ODER STEUERUNG UND/ODER REGELUNG DER ARBEITSTEMPERATUR, WÄRMEÜBERTRAGEREINHEIT, VORRICHTUNG ZUM TRANSPORT VON ENERGIE, KÄLTEMASCHINE SOWIE WÄRMEPUMPE**
METHOD FOR STABILIZING AND / OR CONTROLLING AND / OR REGULATING THE WORKING TEMPERATURE, HEAT EXCHANGER UNIT, DEVICE FOR TRANSPORTING ENERGY, REFRIGERATING MACHINE AND HEAT PUMP
PROCÉDÉ DE STABILISATION ET/OU DE COMMANDE ET/OU DE RÉGULATION DE LA TEMPÉRATURE DE FONCTIONNEMENT, UNITÉ DE TRANSFERT DE CHALEUR, DISPOSITIF DE TRANSPORT D'ÉNERGIE, MACHINE DE RÉFRIGÉRATION AINSI QUE POMPE À CHALEUR

(43) Veröffentlichungstag der Anmeldung: 11.08.2021
(73) Patentinhaber: Fraunhofer-Gesellschaft zur Förderung der angewandten Forschung e.V., 80686 München (DE)
(72) Erfinder: FITGER, Andreas, 79910 Freiburg (DE); MAHLKE, Andreas, 79910 Freiburg (DE); BACHMANN, Nora, 79910 Freiburg (DE); CORHAN, Patrick, 79910 Freiburg (DE); MAIER, Lena Maria, 79910 Freiburg (DE); BARTHOLOMÉ, Kilian, 79910 Freiburg (DE); SCHÄFER-WELSEN, Olaf, 79910 Freiburg (DE)
(74) Vertreter: LBP Lemcke, Brommer & Partner Patentanwälte mbB

(56) Entgegenhaltungen:
- DE-A1- 102015 221 322
- DE-T5- 112018 000 412
- US-A1- 2012 272 665
- US-A1- 2019 264 958

## Beschreibung

Die Erfindung betrifft ein Verfahren zur Stabilisierung und/oder Steuerung und/oder Regelung der Arbeitstemperatur eines kreisprozessbasierten Systems gemäß dem Oberbegriff des Anspruchs 1 und eine Vorrichtung in Form eines kreisprozessbasierten Systems gemäß dem Oberbegriff des Anspruchs 9.

Aus dem Stand der Technik ist es bekannt, bei kreisprozessbasierten Systemen wie Kältemaschinen, Wärmepumpen oder Wärmekraftmaschinen kalorisch wirksames Material einzusetzen, welches in Wechselwirkung mit einem entsprechenden Feld seine Temperatur ändert. Beispielsweise ist in der DE 10 2014 010 476 B3 eine Klimatisierungsvorrichtung auf der Basis einer Heatpipe mit kalorisch wirksamem Material, in diesem Fall magnetokalorischem Material, beschrieben. Ebenfalls ist aus der DE 10 2015 121 657 A1 ein Verfahren zum Betrieb kreisprozessbasierter Systeme unter Einsatz mechanokalorischen Materials bekannt.

Dabei sind Kreisprozesse aus der Thermodynamik bekannt als eine Folge von periodischen Zustandsänderungen eines Arbeitsfluids, die regelmäßig einen Ausgangszustand durchlaufen. Beispiele für solche Kreisprozesse sind das Heizen und/oder Kühlen durch Einsatz von Arbeit wie zum Beispiel in Wärmepumpen oder Kältemaschinen oder auch das Umwandeln von Wärme in Arbeit wie zum Beispiel in Wärmekraftmaschinen.

Wie bereits ausgeführt, ist es aus dem Stand der Technik bekannt, in solchen Kreisprozessen kalorisch wirksame Materialien einzusetzen. Solche kalorisch wirksamen Materialien ändern in dem Einflussbereich eines entsprechend passenden Feldes ihre Temperatur. Unter den Begriff "kalorisch wirksame Materialien" fallen beispielsweise elektrokalorische Materialien, magnetokalorische Materialien sowie mechanokalorische Materialien.

Elektrokalorische Materialien ändern in dem Einflussbereich eines elektrischen Feldes aufgrund der Ausrichtung der elektrischen Momente und der damit verbundenen Entropie-Herabsetzung bzw. einer Kristallgitterumwandlung zwischen einer ferroelektrischen und einer paraelektrischen Phase ihre Temperatur. Magnetokalorische Materialien ändern in dem Einflussbereich eines magnetischen Feldes aufgrund der Ausrichtung der magnetischen Momente und der damit verbundenen Entropie-Herabsetzung bzw. einer Kristallgitterumwandlung zwischen einer ferromagnetischen und einer paramagnetischen Phase ihre Temperatur. Mechanokalorische Materialien (auch bekannt als elastokalorische Materialien, barokalorische Materialien oder Formgedächtnislegierungen) durchlaufen durch das Anlegen einer mechanischen Spannung einen kristallinen Phasenübergang, welcher eine Temperaturänderung des Materials hervorruft. Hierbei handelt es sich üblicherweise um eine Kristallgitterumwandlung zwischen einer Hochtemperaturphase (Austenit) und einer Niedrigtemperaturphase (Martensit).

Die beschriebenen Effekte bei kalorisch wirksamen Materialien sind üblicherweise reversibel und funktionieren auch umgekehrt: Bei mechanokalorischen Materialien kann durch eine Temperaturänderung entsprechend eine Form- und/oder Volumenänderung des Materials induziert werden. Bei magnetokalorischen Materialien kann durch eine Temperaturänderung entsprechend eine Änderung von der ferromagnetischen in eine paramagnetische Phase oder umgekehrt in dem Material induziert werden. Bei elektrokalorischen Materialien kann durch eine Temperaturänderung entsprechend eine Änderung von der ferromagnetischen in eine paramagnetische Phase oder umgekehrt in dem Material induziert werden.

In kreisprozessbasierten Systemen können kalorisch wirksame Materialien daher zum Transport und/oder zur Umwandlung von Energie bzw. Wärme eingesetzt werden: Dazu ist es aus dem Stand der Technik bekannt, dass der Wärmeübertrag über sensible Wärme, insbesondere über das Pumpen von Flüssigkeiten, um Wärme abzuführen, vergleichsweise verlustbehaftet ist und so keine zufriedenstellende Effizienz bzw. Leistungsdichte der Systeme erreicht werden kann. Vielmehr wird die Wärme mittels latenter Wärme übertragen. Dabei wird das kalorisch wirksame Material typischerweise als Wärmeübertrager in einem Fluidkreislauf in Verbindung mit einem Heißseitenreservoir und einem Kaltseitenreservoir angeordnet. Der Wärmeübertrag zwischen Fluid und Wärmeübertrager erfolgt mittels latenter Wärme. Um die Effizienz der Systeme zu steigern, wird das kalorisch wirksame Material zyklisch erwärmt und abgekühlt. Der Wärmefluss nimmt dabei im Idealen linear mit der Zyklenfrequenz zu. Gerichtet wird der Wärmestrom über thermische Dioden, die als aktive oder passive Fluidventile ausgeführt werden. Bekannt ist der Einsatz von passiven Rückschlagventilen.

Dabei ist der Prozess, den das kalorisch wirksame Material durchläuft, zwar grundsätzlich reversibel. In der Realität weisen jedoch alle kalorisch wirksamen Materialien im zyklischen Betrieb eine Eigenerwärmung auf, z. B. durch Hystereseeffekte. Bei jeder Phasenumwandlung geht dadurch Feldenergie verloren, die in Wärme umgewandelt wird und das kalorische Material im Mittel erwärmt. Beispielsweise fallen unter die Eigenerwärmung die bereits genannten Hystereseeffekte, insbesondere bei mechanokalorischen Materialien, aber auch Reibung oder insbesondere bei elektrokalorischen, magnetokalorischen und multikalorischen Materialien eine induktive Erwärmung, kapazitive Erwärmung und/oder resistive Erwärmung, die durch Lade- und/oder Wirbelströme, die durch den Feldwechsel hervorgerufen werden, sowohl in den kalorisch wirksamen Materialien als auch in anderen Elementen induziert wird und damit direkt oder indirekt das kalorisch wirksame Materialelement erwärmt. Die Basistemperatur des kalorisch wirksamen Materials, das heißt Temperatur ohne Feldbeaufschlagung, steigt.

Nachteilig an den vorbekannten Vorrichtungen und Verfahren aus dem Stand der Technik ist, dass die Basistemperatur des kalorisch wirksamen Materials aufgrund der beschriebenen Eigenerwärmung steigt. Mit dieser Materialerwärmung verschiebt sich die Arbeitstemperatur bei steigender Betriebsdauer weg von einer idealen Betriebstemperatur des kalorisch wirksamen Materials. Der Verbleib an Wärme in dem kalorisch wirksamen Materialelement und ein damit einhergehender Temperaturanstieg in dem kalorisch wirksamen Materialelement steht einer effizienten Erhöhung der Betriebsfrequenz der vorbekannten Systeme entgegen.

Der vorliegenden Erfindung liegt daher die Aufgabe zugrunde, ein Verfahren zum Betrieb kreisprozessbasierter Systeme und eine Vorrichtung in Form eines solchen kreisprozessbasierten Systems vorzuschlagen, die einen im Vergleich zu vorbekannten Vorrichtungen und Verfahren höheren Wirkungsgrad aufweisen.

Gelöst wird diese Aufgabe durch ein Verfahren zur Temperaturstabilisierung und/oder Steuerung und/oder Regelung gemäß Anspruch 1 sowie durch eine Vorrichtung gemäß Anspruch 9. Bevorzugte Ausgestaltungen des erfindungsgemäßen Verfahrens finden sich in den Ansprüchen 2 bis 8. Bevorzugte Ausgestaltungen der erfindungsgemäßen Vorrichtung finden sich in den Ansprüchen 9 bis 15.

Das erfindungsgemäße Verfahren ist vorzugsweise zur Durchführung mittels der erfindungsgemäßen Vorrichtung und/oder einer bevorzugten Ausführungsform der Vorrichtung ausgebildet. Die erfindungsgemäße Vorrichtung ist vorzugsweise zur Durchführung des erfindungsgemäßen Verfahrens und/oder einer bevorzugten Ausführungsform des erfindungsgemäßen Verfahrens ausgebildet.

Das erfindungsgemäße Verfahren zur Stabilisierung und/oder Steuerung der Arbeitstemperatur eines kreisprozessbasierten Systems wird, wie an sich bekannt, mit einem kreisprozessbasierten System mit einer Wärmeübertragereinheit mit kalorisch wirksamem Material durchgeführt.

Wesentlich ist, dass mittels eines Kühlfluids eine Basistemperatur des kalorisch wirksamen Materialelements gesteuert wird.

Die Erfindung ist in der Erkenntnis der Anmelderin begründet, dass durch Stabilisierung der Basistemperatur bzw. eine Steuerung und/oder Regelung auf eine gewünschte Basistemperatur die Effizienz kreisprozessbasierter Systeme mit einer Wärmeübertragereinheit mit kalorisch wirksamem Material signifikant gesteigert werden kann.

Unter dem Begriff "kalorisch wirksames Materialelement" wird im Rahmen dieser Beschreibung ein Element teilweise oder vollständig aus kalorisch wirksamem Material verstanden. Das kalorisch wirksame Materialelement kann als Wärmeübertrager ausgebildet sein.

Die Basistemperatur ist im Rahmen dieser Beschreibung eine gewünschte Arbeitstemperatur des kalorisch wirksamen Materials, das heißt die gewünschte Temperatur ohne Feldbeaufschlagung.

Unter dem Begriff "kalorisch wirksames Materialelement" wird im Rahmen dieser Beschreibung ein Element teilweise oder vollständig aus kalorisch wirksamem Material verstanden. Das kalorisch wirksame Materialelement kann als Wärmeübertrager ausgebildet sein.

Die Basistemperatur ist im Rahmen dieser Beschreibung eine gewünschte Arbeitstemperatur des kalorisch wirksamen Materials, das heißt die gewünschte Temperatur ohne Feldbeaufschlagung.

Das Verfahren ist sowohl für den Transport von Energie mit einer Kältemaschine als auch für den Transport von Energie mit einer Wärmepumpe als auch für die Umwandlung von Wärme in Energie in einer Wärmekraftmaschine geeignet. Als kalorisch wirksames Material können mechanokalorische, elektrokalorische oder magnetokalorische Materialien eingesetzt werden.

Das erfindungsgemäße Verfahren zum Betrieb kreisprozessbasierter Systeme wird mit einem kreisprozessbasierten System mit einem Heißseitenreservoir und einem Kaltseitenreservoir und zumindest einer Fluidkammer für ein Arbeitsfluid ausgeführt. Das System ist mit einem Verdampferbereich und einem Kondensatorbereich für das Arbeitsfluid ausgebildet und weist zumindest eine Wärmeübertragereinheit mit zumindest einem kalorisch wirksamen Materialelement auf, wobei das kalorisch wirksame Material in der Fluidkammer mittelbar oder unmittelbar in Wirkverbindung mit dem Arbeitsfluid angeordnet ist und ein Wärmeübertrag zwischen dem kalorisch wirksamen Material des kalorisch wirksamen Materialelements und dem Arbeitsfluid mittels latentem Wärmeübertrag erfolgt.

Wesentlich ist, dass mittels eines Kühlfluids eine Basistemperatur der Wärmeübertragereinheit mit kalorisch wirksamem Material gesteuert wird.

Das Verfahren ist sowohl für den Transport von Energie mit einer Kältemaschine als auch für den Transport von Energie mit einer Wärmepumpe als auch für die Umwandlung von Wärme in Energie in einer Wärmekraftmaschine geeignet. Als kalorisch wirksames Material können mechanokalorische, elektrokalorische oder magnetokalorische Materialien eingesetzt werden.

Das Verfahren umfasst folgende Schritte:
A Aktivieren eines elektrischen Feldes und/oder magnetischen Feldes und/oder mechanischen Spannungs-Feldes, sodass das kalorisch wirksame Material zumindest temporär einer Wechselwirkung mit dem genannten elektrischen Feld und/oder magnetischen Feld und/oder mechanischen Spannungs-Feld ausgesetzt ist;
B Verdampfen des Arbeitsfluids durch Erwärmen des kalorisch wirksamen Materials durch eine in Verfahrensschritt A induzierte erste Temperaturänderung des kalorisch wirksamen Materials über eine Basistemperatur;
C Abführen des Arbeitsfluids zu dem Heißseitenreservoir und Kondensieren des Arbeitsfluids in dem Kondensatorbereich, wobei Wärme mittels latenter Wärme des verdampften Arbeitsfluids transportiert wird;
D Rücktransport des kondensierten Arbeitsfluids von dem Kondensatorbereich zu dem Verdampferbereich;
E Deaktivieren des elektrischen und/oder magnetischen und/oder elastischen Feldes;
F Zweite, entgegengesetzte Temperaturänderung des kalorisch wirksamen Materials unter die Basistemperatur;
G Zuführen des Arbeitsfluids von dem Kaltseitenreservoir in die Fluidkammer, wobei Wärme mittels latenter Wärme des verdampften Arbeitsfluids von dem Verdampferbereich in die Fluidkammer transportiert wird.

Wesentlich ist, dass mittels eines Kühlfluids die Basistemperatur des kalorisch wirksamen Materialelements gesteuert oder geregelt wird.

Hierdurch ergibt sich der Vorteil, dass die Wärme, die in dem kalorisch wirksamen Material entstanden oder eingetragen wurde, von dem kalorisch wirksamen Material abgeführt werden kann. Das kalorisch wirksame Material wird also stabil bei einer Basistemperatur gehalten, die vorzugsweise der idealen Arbeitstemperatur des kalorisch wirksamen Materials entspricht.

Darüber hinaus ist es ebenfalls möglich, nicht nur eine Basistemperatur des kalorisch wirksamen Materialelements zu halten. Vielmehr kann mittels des Kühlfluids die Arbeitstemperatur, das heißt eine gewählte Soll-Basistemperatur, des kalorisch wirksamen Materialelements eingestellt werden. Die Temperaturschwankungen aufgrund der Feldbeaufschlagung des kalorisch wirksamen Materials schwanken dann um die Soll-Basistemperatur.

Kalorisch wirksame Materialien zeigen materialabhängig eine ideale Arbeitstemperatur (Soll-Basistemperatur, Basistemperatur). Kalorische Materialien weisen einen begrenzten Temperaturbereich auf, in dem der kalorische Effekt auftritt. Dieses Temperaturband ist bekannt als Arbeitsfenster. Das Arbeitsfenster ist üblicherweise bei elektrokalorischen und mechanokalorischen Materialien sehr breit (typischerweise bis 100K) und bei magnetokalorischen Materialien sehr schmal (typischerweise wenige Kelvin). Die Lage des Arbeitsfensters ist im wesentlichen materialabhängig und kann über die Materialzusammensetzung bzw. die Legierungsbestandteile eingestellt werden. Erfindungsgemäß ergibt sich der Vorteil, dass die Arbeitstemperatur des Prozesses gezielt eingestellt werden kann.

In einer bevorzugten Ausführungsform der Erfindung wird das Verfahren wiederholt, insbesondere mehrfach wiederholt, bevorzugt zyklisch mit einer Frequenz größer als 1 Hz, insbesondere bevorzugt mit einer Frequenz größer als 10 Hz, vorzugsweise mit einer Frequenz zwischen 1 Hz und 100 Hz.

In einer weiteren bevorzugten Ausführungsform der Erfindung wird das Verfahren mit einem kreisprozessbasierten System durchgeführt, das mehrere Fluidkammern, insbesondere mehrere in Reihe geschaltete Fluidkammern aufweist. Das Arbeitsfluid durchströmt die in Reihe geschalteten Fluidkammern. Da sich die Temperatur des Arbeitsfluids mit jeder Fluidkammer ändert, ist es sinnvoll, das kalorisch wirksame Material der Fluidkammern an die jeweilige Temperatur des Arbeitsfluids anzupassen. Ein solches Verfahren und eine solche Vorrichtung sind beispielsweise in der DE 10 2015 121 657 A1 beschrieben. Auf diese Ausführung wird hier vollumfänglich Bezug genommen.

Alternativ können mehrere Fluidkammern parallel geschaltet sein. Eine solche Anordnung parallel geschalteter Fluidkammern kann in Vorrichtungen zur Wärmerekuperation eingesetzt werden.

Üblicherweise ist zwischen Heißseitenreservoir und Fluidkammer zumindest ein Heißseitenventil vorgesehen und zwischen Kaltseitenreservoir und Fluidkammer zumindest ein Kaltseitenventil vorgesehen. Die Ventile agieren vorzugsweise als passive Ventile und ermöglichen den Betrieb des Systems als thermische Diode, das heißt mit einem gerichteten Wärmetransport. Wie beschrieben ist das System mit einem Verdampferbereich und einem Kondensatorbereich für das Arbeitsfluid ausgebildet. Verdampferbereich und Kondensatorbereich können als separate Bereiche ausgebildet sein, vorzugsweise in Form des Heißseitenreservoirs und des Kaltseitenreservoirs. Es können jedoch auch eigenständige Bereiche vorgesehen sein. Insbesondere bei mehreren in Reihe geschalteten Fluidkammern wirkt das kalorisch wirksame Material einer Wärmeübertragereinheit als Verdampferbereich und als Kondensatorbereich: Das Fluid strömt von dem Kaltseitenreservoir oder einer vorgeschalteten Fluidkammer dampfförmig in die Fluidkammer und kondensiert auf der Wärmeübertragereinheit aus kalorisch wirksamem Material. Durch die Erwärmung des kalorisch wirksamen Materials verdampft das kondensierte Fluid, der Druck in der Fluidkammer steigt und das Fluid strömt über das Heißseitenventil in die nächste Fluidkammer, um dort wieder auf der Wärmeübertragereinheit aus kalorisch wirksamem Material zu kondensieren. Mit diesem wiederholten Prozess durchläuft das Fluid alle in Reihe geschalteten Fluidkammern bis zu dem Heißseitenreservoir. Von dort wird das Fluid über die Fluidrückführung zu dem Kaltseitenreservoir zurückgeführt.

In einer bevorzugten Ausführungsform der Erfindung wird mittels des Kühlfluids die Basistemperatur des kalorisch wirksamen Materialelements an eine ideale Arbeitstemperatur für das kalorisch wirksame Material angepasst. Insbesondere wenn eine Mehrzahl von Fluidkammern in Reihe oder parallel geschaltet sind, ist es vorteilhaft, die Basistemperatur jedes kalorisch wirksamen Materialelements der in Reihe geschalteten Fluidkammern jeweils an eine ideale Arbeitstemperatur für das kalorisch wirksame Material der jeweiligen Fluidkammer anzupassen. Durch den gerichteten Wärmetransport verändert das Arbeitsfluid mit dem Durchlaufen der Fluidkammern seine Temperatur. Durch die Steuerung oder Regelung der Basistemperatur des jeweiligen kalorisch wirksamen Materialelements kann die Systemeffizienz deutlich gesteigert werden.

In einer weiteren bevorzugten Ausführungsform der Erfindung verlaufen der Fluidkreislauf für das Arbeitsfluid und der Fluidkreislauf für das Kühlfluid räumlich getrennt, insbesondere zirkulieren das Arbeitsfluid und das Kühlfluid in zwei getrennten Fluidkreisläufen.

Hierdurch ergibt sich der Vorteil, dass man bei der Auswahl des Kühlfluids nicht auf das Fluid im Arbeitsfluidkreislauf beschränkt ist. Das Fluid im Arbeitsfluidkreislauf kann unabhängig vom Fluid im Kühlfluidkreislauf gewählt werden. Darüber hinaus lassen sich im Arbeitsfluidkreislauf die Parameter Druck und/oder Temperatur unabhängig vom Arbeitsfluidkreislauf einstellen.

Bei einer bevorzugten Realisierung der Erfindung wird das Kühlfluid durch das kalorisch wirksame Materialelement mit kalorisch wirksamem Material geleitet. Bevorzugt wird das Kühlfluid durch zumindest einen Kanal in dem kalorisch wirksamen Materialelement geleitet. Hierdurch ergibt sich der Vorteil, dass in einfacher Art und Weise Kühlfluid und kalorisch wirksames Material des kalorisch wirksamen Materialelements in Wirkverbindung gebracht werden können, sodass ein thermischer Kontakt entsteht und die Wärme von dem kalorisch wirksamen Material abgeführt wird. Dabei ist die Trennung von Kühlfluid innerhalb des Kanals des kalorisch wirksamen Materialelements und Arbeitsfluid an einer äußeren Oberfläche des kalorisch wirksamen Materialelements gewährleistet.

In einer alternativen Ausführungsform der Erfindung wird das Arbeitsfluid als Kühlfluid eingesetzt. Insbesondere bevorzugt kann dafür die Fluidrückführung des Arbeitsfluids von dem Heißseitenreservoir zu dem Kaltseitenreservoir verwendet werden.

Das kalorisch wirksame Material wird einem elektrischen Feld und/oder magnetischen Feld und/oder mechanischen Spannungs-Feld ausgesetzt, wobei das elastische Feld in Form einer mechanischen Spannung in dem kalorisch wirksamen Material erzeugt wird, vorzugsweise durch eine Zug- und/oder Druckbelastung des kalorisch wirksamen Materials, eine Scherung und/oder eine Kompression des kalorisch wirksamen Materials, wobei durch die Zug- und/oder Druckbelastung des kalorisch wirksamen Materials eine Temperaturänderung des kalorisch wirksamen Materials erzeugt wird, und/oder das elektrische Feld mittels eines elektrischen Kondensators erzeugt wird, wobei durch das elektrische Feld eine Temperaturänderung des kalorisch wirksamen Materials erzeugt wird,
und/oder das magnetische Feld mittels eines Permanentmagneten, vorzugsweise mittels eines bewegbaren Permanentmagneten erzeugt wird, wobei durch das magnetische Feld eine Temperaturänderung des kalorisch wirksamen Materials erzeugt wird. Hierdurch kann in einfacher Art und Weise der kalorische Effekt induziert werden.

Vorzugsweise wird ein Transportmittel für das Arbeitsfluid und/oder das Kühlfluid, insbesondere in Form eines Verdichters, durch einen Hub, der durch die Mittel zur Erzeugung des mechanischen Spannungs-Feldes entsteht, angetrieben.

Hierdurch kann Energie aus der Erzeugung des mechanischen Spannungs-Feldes zum Antrieb bzw. zur Beförderung von Kühlfluid und/oder Arbeitsfluid genutzt werden.

Um zu vermeiden, dass das Kaltseitenreservoir austrocknet, da für den gerichteten Wärmetransport das Arbeitsfluid von dem Kaltseitenreservoir als Verdampfer hin zu dem Heißseitenreservoir als Kondensator transportiert wird, ist bei kreisprozessbasierten Systemen mit kalorisch wirksamen Materialien üblicherweise eine Fluidrückführung von dem Heißseitenreservoir zurück zu dem Kaltseitenreservoir vorgesehen. Das Fluid kondensiert im Kondensatorbereich auf der Heißseite und wird mittels der Fluidrückführung zu dem Kaltseitenreservoir zurückgeführt. Wird das Arbeitsfluid beim Zurückleiten von dem Heißseitenreservoir zu dem Kaltseitenreservoir an dem kalorisch wirksamen Materialelement vorbei oder bevorzugt durch die Wärmeübertragereinheit geleitet, kann das Arbeitsfluid als Kühlfluid eingesetzt werden. Kühlfluid und kalorisch wirksames Material können so in Wirkverbindung gebracht werden.

Hierbei liegt es ebenso im Rahmen der Erfindung, dass Heißseiten- und Kaltseitenreservoir vertauscht sind und/oder die Fluidrückführung in die andere thermische Richtung führt. Das Prinzip der Fluidrückführung lässt sich unabhängig von Richtung und Temperaturdifferenz als erfindungsgemäße Temperaturregulierung für das Kühlfluid einsetzen.

Bei der Verwendung des Arbeitsfluid als Kühlfluid ergibt sich der Vorteil, dass in einfacher Art und Weise mit bereits vorhandenen Mitteln das kalorisch wirksame Materialelement gekühlt werden kann.

Ebenso liegt es im Rahmen der Erfindung, dass das kalorisch wirksame Materialelement nicht gekühlt wird, sondern dass mittels des Kühlfluids gezielt eine gewünschte Temperatur eingestellt wird oder auf eine gewünschte Temperatur geregelt wird. Die Verwendung der Bezeichnung "Kühlfluid" und des Begriffs "Kühlens" stellen lediglich Vereinfachungen dar. Gemeint ist hiermit im Rahmen der Erfindung, dass eine beliebige Basistemperatur eingestellt wird. Darunter fällt im Rahmen der Erfindung ebenfalls, dass das kalorisch wirksame Material einer Fluidkammer auf eine gewünschte Basistemperatur, insbesondere die ideale Arbeitstemperatur, erwärmt wird.

In einer alternativen bevorzugten Ausführungsform der Erfindung ist eine Fluidverbindung von dem Kaltseitenreservoir vorgesehen, die Kühlfluid von dem Kaltseitenreservoir durch das kalorisch wirksame Materialelement oder an dem kalorisch wirksamen Materialelement vorbeileitet, sodass Kühlfluid und kalorisch wirksames Material des kalorisch wirksamen Materialelements in Wirkverbindung stehen.

In einer weiteren alternativen bevorzugten Ausführungsform der Erfindung ist zusätzlich zu der Fluidrückführung eine Fluidverbindung von dem Kaltseitenreservoir vorgesehen, die Kühlfluid von dem Kaltseitenreservoir durch das kalorisch wirksame Materialelement oder an dem kalorisch wirksamen Materialelement vorbei leitet zu dem Kaltseitenreservoir, sodass Kühlfluid und kalorisch wirksames Material des kalorisch wirksamen Materialelements in Wirkverbindung stehen.

Die oben beschriebene Aufgabe ist ebenfalls gelöst durch eine Vorrichtung für ein kreisprozessbasiertes System. Die Wärmeübertragereinheit der Vorrichtung umfasst, wie an sich bekannt, ein kalorisch wirksames Materialelement mit kalorisch wirksamem Material, wobei das kalorisch wirksame Material in Wirkverbindung mit einem Arbeitsfluid angeordnet ist, sodass Wärme zwischen Arbeitsfluid und kalorisch wirksamem Material übertragbar ist und der Wärmeübertrag zwischen Arbeitsfluid und kalorisch wirksamem Material im Wesentlichen mittels latentem Wärmeübertrag erfolgt.

Wesentlich ist, dass die Wärmeübertragereinheit der Vorrichtung eine Regulierungsvorrichtung zur Steuerung oder Regelung einer Basistemperatur des kalorisch wirksamen Materialelements umfasst.

Die erfindungsgemäße Vorrichtung weist ebenfalls die bereits genannten Vorteile des erfindungsgemäßen Verfahrens auf. Ebenso weist das erfindungsgemäße Verfahren alle im weiteren genannten Vorteile der erfindungsgemäßen Vorrichtung auf.

In einer möglichen bevorzugten Realisierung ist die Regulierungsvorrichtung als zumindest ein Fluidkanal für das Kühlfluid ausgebildet. Der Fluidkanal verläuft in Wirkverbindung mit dem kalorisch wirksamen Material. Bevorzugt verläuft der Fluidkanal an dem kalorisch wirksamen Material oder durch das kalorisch wirksame Material. Hierdurch kann in einfacher Art und Weise das Kühlfluid in Wirkverbindung mit dem kalorisch wirksamen Material gebracht werden.

In einer bevorzugten Ausführungsform der Erfindung ist das kalorisch wirksame Material in Form von Stäben, bevorzugt in Form von Hohlstäben, ausgebildet. Bevorzugt sind eine Mehrzahl Stäbe, insbesondere bevorzugt 2 bis 100 Stäbe, bevorzugt 5 bis 50 Stäbe, insbesondere bevorzugt 10 Stäbe als Teil der Wärmeübertragereinheit angeordnet. Insbesondere bevorzugt wird die Anzahl und Ausgestaltung der Stäbe in Abhängigkeit von der gesamten kalorischen Materialmasse sowie in Abhängigkeit von dem Verhältnis Oberfläche zu Volumen bestimmt, um ausreichend Wärme ab- bzw. zuführen zu können. Bevorzugt verläuft durch jeden Stab aus kalorisch wirksamem Material der Wärmeübertragereinheit ein Kanal für das Kühlfluid.

Vorzugsweise ist das Kühlfluid Wasser, Alkohol, Butan, Propan, CO₂, NH₃ oder ein Gemisch der vorgenannten Fluide.

In einer bevorzugten Ausführungsform der Erfindung umfasst die Regulierungsvorrichtung zumindest eine Pumpe zum Pumpen des Kühlfluids und/oder zumindest eine Drossel. Sowohl die Pumpe als auch die Drossel sind bevorzugt in der Fluidleitung für das Kühlfluid, insbesondere bevorzugt in der Fluidrückführung angeordnet. Mittels der Pumpe und/oder der Drossel kann eine Geschwindigkeit des Kühlfluids eingestellt werden. Anhand der Geschwindigkeit des Kühlfluids wird gesteuert, welche Wärmemenge von dem kalorisch wirksamen Material des kalorisch wirksamen Materialelements auf das Kühlfluid übertragen wird, das heißt wie stark das Kühlfluid das kalorisch wirksame Material kühlt.

Mit dem Einsatz der Pumpe und/oder einer Drossel kann somit in einfacher Art und Weise die Basistemperatur gesteuert werden.

In einer alternativen Ausführungsform wird das Arbeitsfluid als Kühlfluid eingesetzt. Bevorzugt ist eine Fluidrückführung des kreisprozessbasierten Systems derart angeordnet und ausgestaltet, dass das Arbeitsfluid in der Fluidrückführung in Wirkverbindung mit dem kalorisch wirksamen Material gebracht wird. Arbeitsfluid und Kühlfluid sind somit nicht mehr räumlich getrennt. Vielmehr ist das Arbeitsfluid das Kühlfluid. Es ist somit im Wesentlichen nur ein Fluidkreislauf für Arbeitsfluid und Kühlfluid vorgesehen. Dabei können zwei Kreisläufe von Fluidleitungen vorgesehen sein. Diese beiden Kreisläufe sind jedoch verbunden, bevorzugt über das Heißseitenreservoir und/oder das Kaltseitenreservoir. Das Arbeitsfluid wird von dem Kaltseitenreservoir verdampft und in der Fluidkammer durch das kalorisch wirksame Material erwärmt. Dadurch strömt das Arbeitsfluid zu dem Heißseitenreservoir, wo es in dem Kondensatorbereich kondensiert. Das kondensierte Arbeitsfluid wird als Kühlfluid mittels der Fluidrückführung so zu dem Kaltseitenreservoir zurückgeführt, dass das Arbeitsfluid als Kühlfluid in dem kalorisch wirksamen Materialelement in Wirkverbindung mit dem kalorisch wirksamen Material gebracht wird.

Hierdurch ergibt sich der Vorteil, dass ohne eine aufwändige Gestaltung von Fluidkreisläufen eine Steuerung der Basistemperatur möglich ist.

In einer alternativen Ausführungsform der Erfindung ist die Fluidrückführung des kreisprozessbasierten Systems derart angeordnet und ausgestaltet, dass das Arbeitsfluid als Kühlfluid mittels der Fluidrückführung zu dem kalorisch wirksamen Material geführt wird, sodass eine Benetzung einer Oberfläche des kalorisch wirksamen Materials in der Fluidkammer erfolgt. Das Kühlfluid wird also nicht durch das kalorisch wirksame Material geleitet. Mit dem Kühlfluid wird vielmehr die Oberfläche des kalorisch wirksamen Materials in der Fluidkammer benetzt. Durch die zusätzliche Verdampfungswärme durch das Mehr an Fluid kann so die Temperatur des kalorisch wirksamen Materials eingestellt werden. Das Fluid kann dabei innerhalb des Systems beispielsweise von der Warmseite, der Kaltseite oder einem anderen Segment zugeführt werden. Die Zuführung des Fluides kann aktiv (Pumpe, Ventil) gesteuert oder beispielsweise durch einen passiv induzierten Druckgradienten oder die Schwerkraft in die Fluidkammer geleitet werden. Des Weiteren kann die Fluidzufuhr mit programmierbaren Materialen geregelt werden.

Um die Wärme optimal abzuführen, muss sich das zusätzliche Fluid auf der Oberfläche des kalorischen Materials verteilen, um dort durch Verdampfung Wärme abzuführen. Vorzugsweise wird dies durch eine gezielte Anpassung der Benetzungseigenschaften erzielt. Benetzende Oberflächeneigenschaften können mittels chemischer Behandlung der Oberflächen erzielt werden. Eine Verstärkung des Effekts ist durch eine zusätzliche Mikrostrukturierung der Oberfläche möglich.

Vorzugsweise ist die Wärmeübertragereinheit mit einem Flüssigkeitskreislauf für das Arbeitsfluid und einem Flüssigkeitskreislauf für das Kühlfluid, insbesondere räumlich getrennt, ausgebildet.

Die erfindungsgemäße Aufgabe ist ebenfalls gelöst durch eine Vorrichtung zum Transport von Energie. Die Vorrichtung zum Transport von Energie ist betreibbar als Wärmepumpe und/oder Kühlvorrichtung und umfasst, wie an sich bekannt, ein Heißseitenreservoir und ein Kaltseitenreservoir für ein Arbeitsfluid. Die Vorrichtung umfasst weiter zumindest eine Fluidkammer, die über Fluidleitungen mit dem Heißseitenreservoir und dem Kaltseitenreservoir verbunden ist. Zwischen Heißseitenreservoir und Fluidkammer ist zumindest ein Heißseitenventil vorgesehen; zwischen Kaltseitenreservoir und Fluidkammer ist zumindest ein Kaltseitenventil vorgesehen. In der Fluidkammer ist ein kalorisch wirksames Materialelement mit kalorisch wirksamem Material angeordnet, wobei das kalorisch wirksame Material in Wirkverbindung mit dem Arbeitsfluid steht, sodass Wärme zwischen Arbeitsfluid und kalorisch wirksamem Material mittels latentem Wärmeübertrag übertragen werden kann. Die Vorrichtung weist Mittel zur Erzeugung eines elektrischen und/oder magnetischen und/oder elastischen Feldes für das kalorisch wirksame Material auf, sodass das kalorisch wirksame Material in einem Wechselwirkungsbereich des Feldes angeordnet ist. Eine mögliche Realisierung einer solchen Vorrichtung ist beispielsweise in der DE 10 2015 121 657 A1 beschrieben.

Wesentlich ist, dass die Vorrichtung eine Regulierungsvorrichtung zur Steuerung einer Basistemperatur des kalorisch wirksamen Materialelements umfasst.

Die erfindungsgemäße Vorrichtung zum Transport von Energie bietet ebenfalls die oben beschriebenen Vorteile des erfindungsgemäßen Verfahrens sowie der erfindungsgemäßen Wärmeübertragereinheit. Die erfindungsgemäße Vorrichtung zum Transport von Energie ist insbesondere für den Einsatz der erfindungsgemäßen Wärmeübertragereinheit und/oder der bevorzugten Ausführungsformen der erfindungsgemäßen Wärmeübertragereinheit geeignet.

Die erfindungsgemäße Aufgabe ist ebenfalls gelöst durch eine Kühlvorrichtung oder eine Wärmepumpe mit einer Wärmeübertragereinheit, wobei die Wärmeübertragereinheit ein kalorisch wirksames Materialelement mit kalorisch wirksamem Material umfasst. Das kalorisch wirksame Material ist in Wirkverbindung mit einem Arbeitsfluid angeordnet, sodass Wärme zwischen Arbeitsfluid und kalorisch wirksamem Material übertragbar ist, wobei der Wärmeübertrag zwischen Arbeitsfluid und kalorisch wirksamem Material im Wesentlichen mittels latentem Wärmeübertrag erfolgt.

Wesentlich ist, dass die Wärmepumpe oder die Kühlvorrichtung eine Regulierungsvorrichtung zur Steuerung einer Basistemperatur des kalorisch wirksamen Materialelements umfasst.

Das erfindungsgemäße Verfahren sowie die erfindungsgemäße Vorrichtung sind grundsätzlich für Anwendungen geeignet, bei denen Wärme von einem Reservoir mit einer ersten Temperatur in ein Reservoir mit einer zweiten Temperatur transportiert werden soll. Das erfindungsgemäße Verfahren und die erfindungsgemäße Vorrichtung sind daher vorzugsweise als Wärmepumpen oder Kältemaschinen ausgebildet oder werden in Wärmepumpen oder Kältemaschinen eingesetzt.

Eine besonders vorteilhafte mögliche Realisierung besteht in einer Klimatisierungseinrichtung, insbesondere in einem Kühl- und Klimagerät. Bekannte Kühl- und Klimageräte arbeiten in der Regel kompressorbasiert und benötigen ein Kältemittel. Diese Kältemittel sind bekanntermaßen klima- und umweltschädlich sowie leicht entzündlich und darüber hinaus gesundheitsschädlich. Aus diesem Grund ist die Kühlung mit Hilfe der vorgestellten Systeme mit kalorisch wirksamen Materialien eine interessante Alternative zu kompressorbasierten Systemen. Nachteilig an den aus dem Stand der Technik bereits bekannten Systemen ist die vergleichsweise geringe Effizienz. Diese Effizienz wird mit der erfindungsgemäßen Temperaturstabilisierung gesteigert.

Weitere bevorzugte Merkmale und Ausführungsformen der Erfindung werden im Folgenden anhand von Ausführungsbeispielen und den Figuren erläutert.

Dabei zeigt:
- Figur 1: eine schematische Darstellung eines ersten Ausführungsbeispiels der Erfindung mit Innendurchflutung der Wärmeübertragereinheit;
- Figur 2: ein zweites Ausführungsbeispiel der Erfindung mit Innendurchflutung der Wärmeübertragereinheit;
- Figur 3: ein drittes Ausführungsbeispiel der Erfindung mit Innendurchflutung der Wärmeübertragereinheit;
- Figur 4: eine schematische Darstellung eines vierten Ausführungsbeispiels der Erfindung mit Benetzung der Oberfläche der Wärmeübertragereinheit;
- Figur 5: eine schematische Darstellung eines sechsten Ausführungsbeispiels der Erfindung in Form eines Kühlsystems.

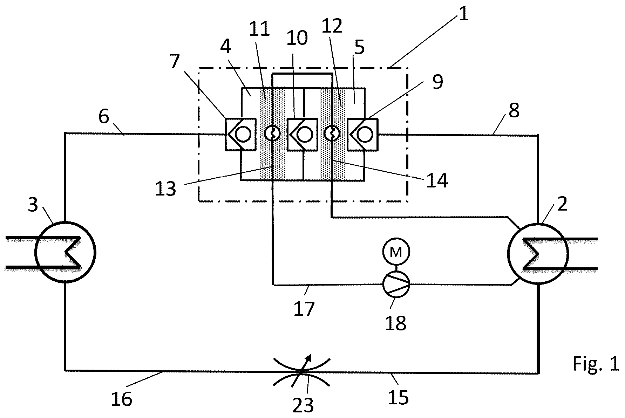

In den Figuren 1 bis 5 bezeichnen die gleiche Bezugszeichen die gleichen oder gleichwirkenden Elemente.

Figur 1 zeigt als ein erstes Ausführungsbeispiel eine schematische Darstellung einer erfindungsgemäßen Kältemaschine. Die Kältemaschine 1 ist mit einem Heißseitenreservoir 2 und einem Kaltseitenreservoir 3 für ein Arbeitsfluid ausgebildet. Vorliegend wird als Arbeitsfluid Wasser verwendet. Das Kaltseitenreservoir weist vorliegend eine Temperatur von 5°C sowie einen herrschenden Druck von 8 mbar auf. Das Heißseitenreservoir 2 weist vorliegend eine Temperatur von 35°C sowie einen herrschenden Druck von 55 mbar auf.

Zwischen Kaltseitenreservoir 3 und Heißseitenreservoir 2 sind zwei Fluidkammern 4, 5 vorgesehen. Die erste Fluidkammer 4 ist über eine Fluidleitung 6 mit dem Kaltseitenreservoir 3 verbunden. Zwischen Kaltseitenreservoir 3 und erster Fluidkammer 4 ist in der Fluidleitung 6 ein Kaltseitenventil 7 angeordnet. Das Kaltseitenventil 7 ist als Rückschlagventil ausgebildet.

Die zweite Fluidkammer 5 ist über eine Fluidleitung 8 mit dem Heißseitenreservoir 2 verbunden. Zwischen Heißseitenreservoir 2 und zweiter Fluidkammer 5 ist in der Fluidleitung 8 ein Heißseitenventil 9 angeordnet. Das Heißseitenventil 9 ist als Rückschlagventil 10 ausgebildet.

Die erste Fluidkammer 4 und die zweite Fluidkammer 5 sind ebenfalls über ein Rückschlagventil 10 miteinander verbunden. In der ersten Fluidkammer 4 und in der zweiten Fluidkammer 5 ist jeweils ein kalorisch wirksames Materialelement 11, 12 angeordnet. Die kalorisch wirksamen Materialelemente 11, 12 sind vorliegend aus mechanokalorischem Material ausgebildet, speziell eine Nickel-TitanLegierung Ni55,8Ti44,2.

Durch das kalorisch wirksame Material der kalorisch wirksamen Materialelemente 11, 12 verläuft vorliegend ein Kanal 13, 14. Durch den Kanal wird das Kühlfluid zur Stabilisierung und/oder Steuerung der Basis-Temperatur der kalorisch wirksamen Materialelemente 11, 12 geleitet. Das Kühlfluid durchströmt somit die kalorisch wirksamen Materialelemente 11, 12.

Zwischen Heißseitenreservoir 2 und Kaltseitenreservoir 3 ist eine Fluidrückführung 15 angeordnet. In der Fluidrückführung 15 ist eine Drossel 23 vorgesehen. Die Kühlvorrichtung 1 weist somit einen ersten Fluidkreislauf 16 für das Arbeitsfluid auf. Der Fluidkreislauf 16 für das Arbeitsfluid umfasst das Kaltseitenreservoir 3, die erste Fluidleitung 6, die erste Fluidkammer 4, die zweite Fluidkammer 5, die zweite Fluidleitung 8, das Heißseitenreservoir 2 sowie die Fluidrückführung 15. Der Fluidkreislauf 16 ist als druckdichtes System ausgebildet, in dem im Wesentlichen alle Fremdgase (das heißt alle Gase mit Ausnahme des Arbeitsfluids) aus dem druckdichten System entfernt sind.

In dem Fluidkreislauf ist, wie bereits beschrieben, zwischen dem Kaltseitenreservoir 3 und der ersten Fluidkammer 4 das Kaltseitenventil 7 und zwischen dem Heißseitenreservoir und der zweiten Fluidkammer 5 das Heißseitenventil 9 angeordnet. Vorliegend sind das Kaltseitenventil 7 und das Heißseitenventil 9 als druckgesteuerte Ventile ausgebildet. Der jeweilige Differenzdruck, bei dem die beiden Ventile öffnen, ist einstellbar und liegt vorliegend bei ungefähr 1 mbar.

Zusätzlich zu dem ersten Fluidkreislauf 16 für das Arbeitsfluid ist ein zweiter Fluidkreislauf 17 für das Kühlfluid vorgesehen. In dem zweiten Fluidkreislauf 17 ist eine Pumpe 18 zur Steuerung des Durchflusses des Kühlfluids vorgesehen.

Der zweite Fluidkreislauf 17 verläuft von dem Heißseitenreservoir 2 über die Pumpe 18 zu der ersten Fluidkammer 4. In der ersten Fluidkammer 4 verläuft der zweite Fluidkreislauf 17 durch den ersten Kanal 13 durch das erste kalorisch wirksame Materialelement 11. Dadurch wird das erste kalorisch wirksame Materialelement 11 innen von dem Kühlfluid durchströmt. Der Fluidkreislauf 17 verläuft dann weiter zu der zweiten Fluidkammer 5. Hier verläuft der zweite Fluidkreislauf mit dem zweiten Kanal 14 durch das zweite kalorisch wirksame Materialelement 12. Damit wird auch das zweite kalorisch wirksame Materialelement 12 innen von dem Kühlfluid durchströmt. Der zweite Fluidkreislauf 17 verläuft dann weiter zurück zu dem Heißseitenreservoir 2. Der zweite Fluidkreislauf 17 ist somit ein Fluidkreislauf, der über das Heißseitenreservoir 2 mit dem ersten Fluidkreislauf 16 verbunden ist. Das Arbeitsfluid des ersten Fluidkreislaufs 16 wird somit als Kühlfluid des zweiten Fluidkreislaufs 17 eingesetzt.

Mittels der Pumpe 18 kann die Geschwindigkeit des Kühlfluids gesteuert werden. Über die Steuerung der Geschwindigkeit ist einstellbar, wieviel Wärme von dem ersten kalorisch wirksamen Materialelement 11 und dem zweiten kalorisch wirksamen Materialelement 12 auf das Kühlfluid übertragen wird, sodass dadurch die Basistemperatur der beiden kalorisch wirksamen Materialelemente 11, 12 steuerbar ist.

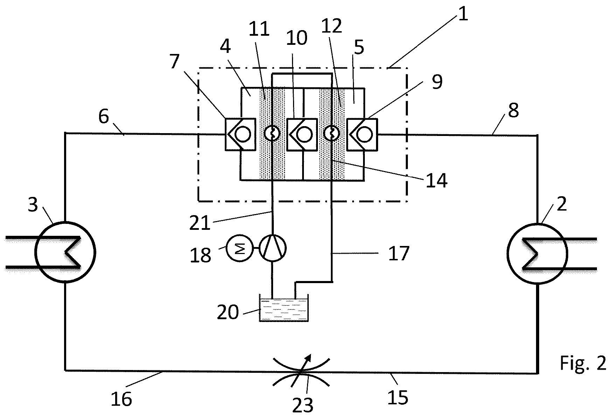

Figur 2 zeigt eine schematische Darstellung eines weiteren Ausführungsbeispiels der Erfindung mit einem separaten Reservoir für das Kühlfluid.

Zur Vermeidung von Wiederholungen soll im Folgenden lediglich auf die Unterschiede zu Figur 1 eingegangen werden.

Für das Kühlfluid und das Arbeitsfluid sind vorliegend zwei getrennte Flüssigkeitskreisläufe 16, 19 vorgesehen. Das Arbeitsfluid strömt, wie zu Figur 1 beschrieben, in einem Flüssigkeitskreislauf 16 vom Kaltseitenreservoir 3 über die kalorisch wirksamen Materialelemente 11, 12 zum Heißseitenreservoir 2 und über die Fluidrückführung 15 zurück zu dem Kaltseitenreservoir 3.

Der separate Fluidkreislauf 19 für das Kühlfluid ist vorliegend nicht mit dem Kaltseitenreservoir 3 oder dem Heißseitenreservoir 2 verbunden. Vielmehr ist ein eigenes Kühlfluidreservoir 20 für das Kühlfluid vorgesehen. Von dem Kühlfluidreservoir 20 verläuft eine Fluidleitung 21 zu dem ersten kalorisch wirksamen Materialelement 11 mit kalorisch wirksamem Material. Das Kühlfluid durchströmt das erste kalorisch wirksame Materialelement 11 durch den Kanal 13, der innen durch das kalorisch wirksame Material des ersten kalorisch wirksamen Materialelements 11 verläuft. Von dem ersten kalorisch wirksamen Materialelement 11 strömt das Kühlfluid über den zweiten Kanal 14 durch das zweite kalorisch wirksame Materialelement 12. Der Kanal 14 verläuft ebenso im Inneren des kalorisch wirksamen Materials. Um den separaten Fluidkreislauf 19 zu schließen führt eine Fluidleitung von dem Kanal 14 zurück zu dem Kühlfluidreservoir 20.

In dem Fluidkreislauf 19 ist in der Fluidleitung 21 zwischen Kühlfluidreservoir 20 und Kanal 13 eine Pumpe 18 vorgesehen. Mit der Pumpe 18 kann die Geschwindigkeit des Kühlfluids in dem Fluidkreislauf 19 gesteuert werden. Über die Geschwindigkeit ist, wie zu Figur 1 beschrieben, die Basistemperatur der beiden kalorisch wirksamen Materialelemente 11, 12 steuerbar.

Der separate Fluidkreislauf 19 für das Kühlfluid ist somit ein geschlossener Fluidkreislauf, der räumlich getrennt von dem ersten Fluidkreislauf 16 für das Arbeitsfluid ist.

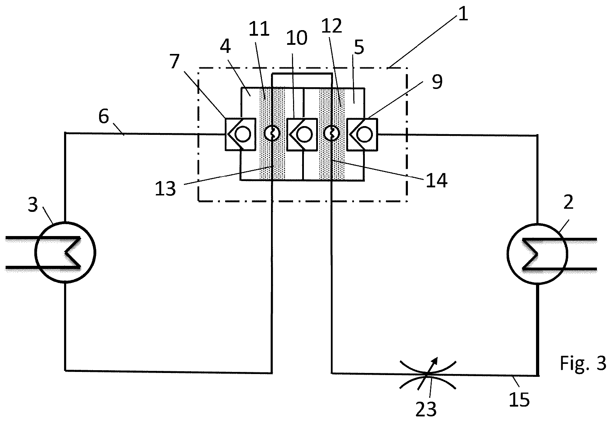

Figur 3 zeigt eine schematische Darstellung eines weiteren Ausführungsbeispiels der Erfindung.

Die Fluidrückführung 15 ist vorliegend derart ausgebildet, dass die Fluidrückführung 15 über den Kanal 14 durch das kalorisch wirksame Materialelement 12 und durch den Kanal 13 durch das kalorisch wirksame Materialelement 11 verläuft. Die Fluidrückführung 15 verläuft vom Heißseitenreservoir zum Kaltseitenreservoir 3.

In der Fluidleitung der Fluidrückführung 15 ist zwischen Heißseitenreservoir 2 und dem Kanal 14 durch das kalorisch wirksame Materialelement 12 eine Drossel 23 vorgesehen. Mit der Drossel 23 kann die Geschwindigkeit des Kühlfluids eingestellt werden, sodass die Wärmemenge, die von den kalorisch wirksamen Materialelementen 12 und 11 auf das Kühlfluid übertragen wird, gesteuert werden kann.

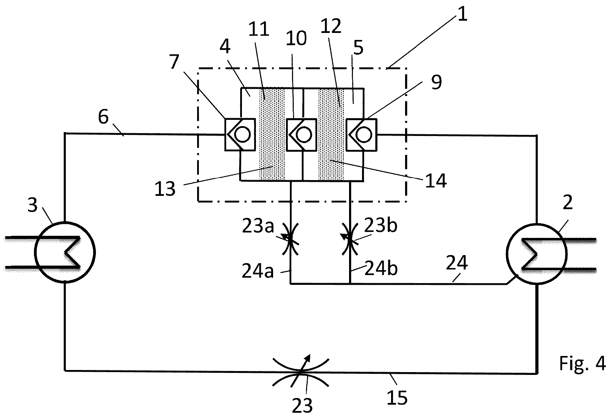

Figur 4 zeigt eine schematische Darstellung eines weiteren Ausführungsbeispiels der Erfindung mit Benetzung der Oberfläche des kalorisch wirksamen Materials durch das Kühlfluid.

Der erste Fluidkreislauf 16 ist mit der Fluidrückführung 15, wie zu den Figuren 1 und 2 beschrieben, ausgebildet.

Von dem Heißseitenreservoir 2 führt eine Fluidleitung 24 zu den Fluidkammern 4, 5. Die Fluidleitung 24 teilt sich in zwei Fluidleitungen 24.a, 24.b auf, die jeweils an der dem Heißseitenreservoir zugewandten Seite der Fluidkammern 4, 5 enden. In den beiden Fluidleitungen ist jeweils eine Drossel 23.a, 23.b vorgesehen. Mit den Fluidleitungen 24.a, 24.b wird das Kühlfluid den beiden Fluidkammern 4, 5 derart zugeführt, dass eine dem Heißseitenreservoir 2 zugewandte Oberfläche der kalorisch wirksamen Materialelemente 11, 12 jeweils mit dem Kühlfluid benetzt wird. Durch das zusätzliche Kühlfluid, was zusätzlich zu dem Arbeitsfluid in der Fluidkammer 4, 5 zur Verfügung steht, erfolgt eine stärkere Verdampfung und damit ein größerer Abtransport von Wärme. Dadurch kann die Temperatur der kalorisch wirksamen Materialelemente 11, 12 eingestellt werden.

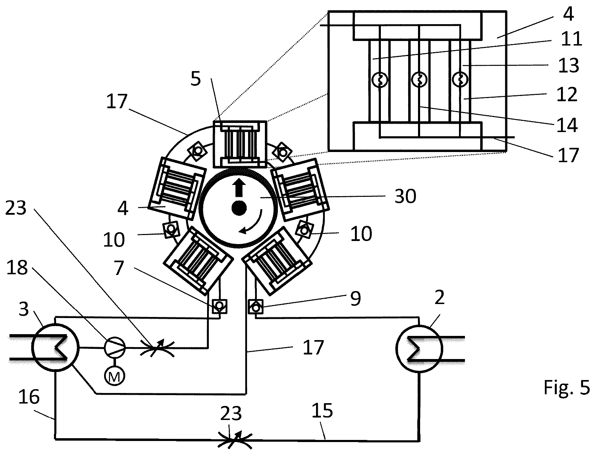

Figur 5 zeigt eine schematische Darstellung eines Ausführungsbeispiels eines erfindungsgemäßen kreisprozessbasierten Systems, vorliegend einer Kühlvorrichtung.

Die Kühlvorrichtung umfasst mehrere Fluidkammern, vorliegend fünf Fluidkammern. Die Fluidkammern 4, 5 sind kreisförmig um eine Mitte angeordnet. In der Mitte ist ein Exzenter 30 vorgesehen. Beispielhaft gekennzeichnet sind die Fluidkammern 4, 5. Die Fluidkammern 4, 5 sind über Rückschlagventile miteinander verbunden. In den Fluidkammern 4, 5 sind kalorisch wirksame Materialelemente 11, 12 vorgesehen, vorliegend Hohlstäbe aus mechanokalorischem Material. Vorliegend sind mehrere Fluidkammern 4, 5 in Reihe geschaltet. Mittels des Exzenters 30 werden die kalorisch wirksamen Materialelemente 11, 12 mit Druck beaufschlagt. Dadurch erwärmt sich das mechanokalorische Material der kalorisch wirksamen Materialelemente 11, 12. Durch die Temperaturänderung verdampft das Fluid in der Fluidkammer 4, 5 und strömt über das Rückschlagventil in die nächste Fluidkammer. Durch die Pfeile ist die "Bewegungsrichtung" des Arbeitsfluis angegeben, vorliegend gegen den Urzeigersinn. In diese Richtung wird auch die Wärme transportiert. Das Arbeitsfluid durchströmt die in Reihe geschalteten Fluidkammern 4, 5. Mit jeder Fluidkammer 4, 5 ändert sich die Temperatur des Arbeitsfluids.

Die Vorrichtungen zur Temperaturregulierung sind derart angepasst, dass die Temperatur der kalorisch wirksamen Materialelemente 11, 12 jeweils auf die ideale Arbeitstemperatur in der jeweiligen Fluidkammer 4, 5 eingestellt wird.

Die Fluidkammer 5 ist als Detailausschnitt vergrößert dargestellt. In der Fluidkammer 5 sind drei Hohlstäbe aus mechanokalorischem Material, beispielhaft gekennzeichnet 11, 12, vorgesehen, die jeweils einen Kanal, beispielhaft gekennzeichnet 13, 14 aufweisen. Über den Fluidkreislauf 17 strömt das Kühlfluid durch das kalorisch wirksame Material.

### Bezugszeichenliste

- 1: Kühlvorrichtung
- 2: Heißseitenreservoir
- 3: Kaltseitenreservoir
- 4: Fluidkammer
- 5: Fluidkammer
- 6: Fluidleitung
- 7: Kaltseitenventil
- 8: Fluidleitung
- 9: Heißseitenventil
- 10: Rückschlagventil
- 11: Kalorisch wirksames Materialelement
- 12: Kalorisch wirksames Materialelement
- 13: Kanal
- 14: Kanal
- 15: Fluidrückführung
- 16: 1. Fluidkreislauf
- 17: 2. Fluidkreislauf
- 18: Pumpe
- 19: Fluidkreislauf
- 20: Kühlfuidreservoir
- 21: Fluidleitung
- 23: Drossel
- 23.1: Drossel
- 23.2: Drossel
- 24.a: Fluidleitungen
- 24.b: Fluidleitungen
- 30: Exzenter

## Patentansprüche

1. Verfahren zum Betrieb kreisprozessbasierter Systeme mit einem Heißseitenreservoir (2) und einem Kaltseitenreservoir (3) und zumindest einer Fluidkammer (4, 5), einem Verdampferbereich und einem Kondensatorbereich für ein Arbeitsfluid und zumindest einer Wärmeübertragereinheit mit zumindest einem kalorisch wirksamen Materialelement (11, 12), wobei das kalorisch wirksame Materialelement (11, 12) in der Fluidkammer (4, 5) mittelbar oder unmittelbar in Wirkverbindung mit dem Arbeitsfluid angeordnet ist und ein Wärmeübertrag zwischen dem kalorisch wirksamen Material des kalorisch wirksamen Materialelements (11, 12) und dem Arbeitsfluid mittels latentem Wärmeübertrag erfolgt,
folgende Verfahrensschritte umfassend:
A Aktivieren eines elektrischen Feldes und/oder magnetischen Feldes und/oder mechanischen Spannungs-Feldes, sodass das kalorisch wirksame Material zumindest temporär einer Wechselwirkung mit dem genannten elektrischen Feld und/oder magnetischen Feld und/oder mechanischen Spannungs-Feld ausgesetzt ist;
B Verdampfen des Arbeitsfluids durch Erwärmen des kalorisch wirksamen Materials durch eine in Verfahrensschritt A induzierte erste Temperaturänderung des kalorisch wirksamen Materials über eine Basistemperatur, wobei die Basistemperatur eine Temperatur des kalorisch wirksamen Materials ohne Feldbeaufschlagung ist;
C Abführen des Arbeitsfluids zu dem Heißseitenreservoir (2) und Kondensieren des Arbeitsfluids an dem Kondensatorbereich, wobei Wärme mittels latenter Wärme des verdampften Arbeitsfluids transportiert wird;
D Rücktransport des kondensierten Arbeitsfluids von dem Kondensatorbereich zu dem Verdampferbereich;
E Deaktivieren des elektrischen und/oder magnetischen und/oder elastischen Feldes;
F Zweite, entgegengesetzte Temperaturänderung des kalorisch wirksamen Materials unter die Basistemperatur;
G Zuführen des Arbeitsfluids von dem Kaltseitenreservoir (3) in die Fluidkammer, wobei Wärme mittels latenter Wärme des verdampften Arbeitsfluids von dem Verdampferbereich in die Fluidkammer transportiert wird;
**dadurch gekennzeichnet,**
**dass** mittels eines Kühlfluids die Basistemperatur des kalorisch wirksamen Materialelements gesteuert oder geregelt wird.

2. Verfahren nach Anspruch 1,
**dadurch gekennzeichnet,**
**dass** das Verfahren wiederholt wird, insbesondere, dass eine Mehrzahl von Fluidkammern (4, 5) in Reihe oder parallel geschaltet sind, sodass das Arbeitsfluid die in Reihe oder parallel geschalteten Fluidkammern (4, 5) durchströmt und das Verfahren in den in Reihe oder parallel geschalteten Fluidkammern zyklisch wiederholt wird.

3. Verfahren nach einem der vorangegangenen Ansprüche,
**dadurch gekennzeichnet,**
**dass** mittels des Kühlfluids die Basistemperatur des kalorisch wirksamen Materialelements (11, 12) an eine ideale Arbeitstemperatur für das kalorisch wirksame Material angepasst wird, insbesondere dass eine Mehrzahl von Fluidkammern (4, 5) in Reihe oder parallel geschaltet sind und die Basistemperatur des kalorisch wirksamen Materialelements (11, 12) der in Reihe oder parallel geschalteten Fluidkammern (4, 5) jeweils an eine ideale Arbeitstemperatur für das kalorisch wirksame Material der jeweiligen Fluidkammer (4, 5) angepasst wird.

4. Verfahren nach einem der vorangegangenen Ansprüche,
**dadurch gekennzeichnet,**
**dass** Arbeitsfluid und Kühlfluid räumlich getrennt sind, insbesondere, dass Arbeitsfluid und Kühlfluid in zwei getrennten Flüssigkeitskreisläufen (16, 17) zirkulieren.

5. Verfahren nach einem der vorangegangenen Ansprüche,
**dadurch gekennzeichnet,**
**dass** das Kühlfluid durch das kalorisch wirksame Materialelement (11, 12) geleitet wird, vorzugsweise dass das Kühlfluid durch zumindest einen Kanal (13, 14) in dem kalorisch wirksamen Materialelement (11, 12) geleitet wird.

6. Verfahren nach einem der vorangegangenen Ansprüche,
**dadurch gekennzeichnet,**
**dass** das Arbeitsfluid als Kühlfluid eingesetzt wird, insbesondere, dass eine Fluidrückführung des Arbeitsfluids von dem Heißseitenreservoir (2) zu dem Kaltseitenreservoir (3) als Kühlfluid durch das kalorisch wirksame Materialelement (11, 12) oder an dem kalorisch wirksamen Materialelement (11, 12) vorbeigeleitet wird, sodass Kühlfluid und kalorisch wirksames Material des kalorisch wirksamen Materialelements (11, 12) in Wirkverbindung stehen und/oder dass eine Fluidverbindung von dem Kaltseitenreservoir (3) als Kühlfluid durch das kalorisch wirksame Materialelement (11, 12) oder an dem kalorisch wirksamen Materialelement (11, 12) vorbeigeleitet wird, sodass Kühlfluid und kalorisch wirksames Material des kalorisch wirksamen Materialelements (11, 12) in Wirkverbindung stehen.

7. Verfahren nach einem der vorangegangenen Ansprüche,
**dadurch gekennzeichnet,**
**dass** das kalorisch wirksame Material dem mechanischen Spannungs-Feld ausgesetzt wird, wobei das mechanischen Spannungs-Feld in Form einer mechanischen Spannung in dem kalorisch wirksamen Material erzeugt wird, vorzugsweise durch eine Zug- und/oder Druckbelastung des kalorisch wirksamen Materials, eine Scherung und/oder eine Kompression des kalorisch wirksamen Materials, wobei durch die Zug- und/oder Druckbelastung des kalorisch wirksamen Materials eine Temperaturänderung des kalorisch wirksamen Materials erzeugt wird, und/oder dass das kalorisch wirksame Material dem elektrischen Feld ausgesetzt wird, wobei das elektrische Feld mittels eines elektrischen Kondensators erzeugt wird, wobei durch das elektrische Feld eine Temperaturänderung des kalorisch wirksamen Materials erzeugt wird, und/oder dass das kalorisch wirksame Material dem magnetischen Feld ausgesetzt wird, wobei das magnetische Feld mittels eines Permanentmagneten, vorzugsweise mittels eines bewegbaren Permanentmagneten erzeugt wird, wobei durch das magnetische Feld eine Temperaturänderung des kalorisch wirksamen Materials erzeugt wird.

8. Verfahren nach Anspruch 7,
**dadurch gekennzeichnet,**
**dass** ein Transportmittel für das Arbeitsfluid und/oder das Kühlfluid, insbesondere in Form eines Verdichters, durch einen Hub, der durch die Mittel zur Erzeugung des mechanischen Spannungs-Feldes entsteht, angetrieben wird.

9. Vorrichtung in Form eines kreisprozessbasierten Systems mit einem Heißseitenreservoir (2) und einem Kaltseitenreservoir (3) und zumindest einer Fluidkammer (4, 5), einem Verdampferbereich und einem Kondensatorbereich für ein Arbeitsfluid und zumindest einer
Wärmeübertragereinheit für ein kreisprozessbasiertes System, insbesondere für eine Wärmepumpe und/oder eine Kühlvorrichtung und/oder eine Wärmekraftmaschine, welche Wärmeübertragereinheit zumindest ein kalorisch wirksames Materialelement (11, 12) mit kalorisch wirksamem Material umfasst und die Vorrichtung Mittel zur Aktivierung und Deaktivierung eines elektrischen Felders und/oder magnetischen Feldes und/oder mechanischen Spannungsfeldes umfasst und das kalorisch wirksame Material in einem Wechselwirkungsbereich des elektrischen Felders und/oder magnetischen Feldes und/oder mechanischen Spannungsfeldes angeordnet ist, wobei das kalorisch wirksame Material in der Fluidkammer angeordnet ist und in Wirkverbindung mit einem Arbeitsfluid angeordnet ist, sodass Wärme zwischen Arbeitsfluid und kalorisch wirksamem Material übertragbar ist und der Wärmeübertrag zwischen Arbeitsfluid und kalorisch wirksamem Material im Wesentlichen mittels latenten Wärmeübertrags in Form von Verdampfungs- und Kondensationswärme erfolgt,
**dadurch gekennzeichnet,**
**dass** die Wärmeübertragereinheit eine Regulierungsvorrichtung zur Steuerung oder Regelung einer Basistemperatur des kalorisch wirksamen Materialelements mittels eines Kühlfluids umfasst, wobei die Basistemperatur eine Temperatur des kalorisch wirksamen Materials ohne Feldbeaufschlagung ist.

10. Vorrichtung nach Anspruch 9,
**dadurch gekennzeichnet,**
**dass** die Regulierungsvorrichtung als zumindest ein Fluidkanal (13, 14) für ein Kühlfluid in Wirkverbindung mit dem kalorisch wirksamen Material, insbesondere an dem kalorisch wirksamen Material oder durch das kalorisch wirksame Material verlaufend, ausgebildet ist.

11. Vorrichtung nach Anspruch 9 oder 10,
**dadurch gekennzeichnet,**
**dass** das Kühlfluid Wasser, Alkohol, Butan, Propan, CO₂, NH₃ und/oder ein Gemisch der vorgenannten Fluide ist.

12. Vorrichtung nach einem der Ansprüche 9 bis 11,
**dadurch gekennzeichnet,**
**dass** die Regulierungsvorrichtung zumindest eine Pumpe (18) zum Pumpen des Kühlfluids und/oder eine Drossel (23) umfasst.

13. Vorrichtung nach einem der Ansprüche 9 bis 12,
**dadurch gekennzeichnet,**
**dass** das Arbeitsfluid als Kühlfluid eingesetzt wird, insbesondere dass eine Fluidrückführung (15) des kreisprozessbasierten Systems derart angeordnet und ausgestaltet ist, dass das Arbeitsfluid in der Fluidrückführung (15) in Wirkverbindung mit dem kalorisch wirksamen Material gebracht wird.

14. Vorrichtung nach einem der Ansprüche 9 bis 13,
**dadurch gekennzeichnet,**
**dass** eine Fluidrückführung (15) des kreisprozessbasierten Systems derart angeordnet und ausgestaltet ist, dass das Arbeitsfluid mittels der Fluidrückführung (15) zu dem kalorisch wirksamen Material geführt wird, sodass eine Benetzung einer Oberfläche des kalorisch wirksamen Materials in der Fluidkammer erfolgt.

15. Vorrichtung nach einem der Ansprüche 9 bis 14,
**dadurch gekennzeichnet,**
**dass** ein Flüssigkeitskreislauf (16) für das Arbeitsfluid und ein Flüssigkeitskreislauf (17) für das Kühlfluid, insbesondere räumlich getrennt, vorgesehen sind.

## Claims

1. Method for operating cyclic-process-based systems with a hot-side reservoir (2) and a cold-side reservoir (3) and at least one fluid chamber (4, 5), with an evaporator region and a condenser region for a working fluid and at least one heat-exchanger unit with at least one calorically active material element (11, 12), wherein the calorically active material element (11, 12) is arranged in the fluid chamber (4, 5) so as to be indirectly or directly operatively connected to the working fluid and a heat transfer between the calorically active material of the calorically active material element (11, 12) and the working fluid takes place by means of a latent heat transfer,
the method comprising the following steps:
A activating an electric field and/or magnetic field and/or mechanical stress field such that the calorically active material is at least temporarily subjected to interaction with the aforementioned electric field and/or magnetic field and/or mechanical stress field;
B evaporating the working fluid through heating of the calorically active material by a first temperature change, induced in method step A, of the calorically active material to above a base temperature, wherein the base temperature is a temperature of the calorically active material without field application;
C discharging the working fluid to the hot-side reservoir (2) and condensing the working fluid at the condenser region, wherein heat is transported by means of latent heat of the evaporated working fluid;
D return transport of the condensed working fluid from the condenser region to the evaporator region;
E deactivating the electric and/or magnetic and/or elastic field;
F causing a second, opposite temperature change of the calorically active material to below the base temperature;
G feeding of the working fluid from the cold-side reservoir (3) into the fluid chamber, wherein heat is transported from the evaporator region into the fluid chamber by means of latent heat of the evaporated working fluid;
**characterized in that**
the base temperature of the calorically active material element is controlled or regulated by means of a cooling fluid.

2. Method according to claim 1,
**characterized in that**
the method is repeated, in particular **in that** a plurality of fluid chambers (4, 5) are connected in series or parallel such that the working fluid flows through the fluid chambers (4, 5) that are connected in series or parallel and the method is cyclically repeated in the fluid chambers that are connected in series or parallel.

3. Method according to any one of the preceding claims,
**characterized in that**
by means of the cooling fluid, the base temperature of the calorically active material element (11, 12) is adapted to an ideal working temperature for the calorically active material, in particular **in that** a plurality of fluid chambers (4, 5) are connected in series or parallel and the base temperature of the calorically active material element (11, 12) of the fluid chambers (4, 5) connected in series or parallel is adapted in each case to an ideal working temperature for the calorically active material of the respective fluid chamber (4, 5).

4. Method according to any one of the preceding claims,
**characterized in that**
the working fluid and cooling fluid are spatially separated, in particular **in that** the working fluid and cooling fluid circulate in two separate liquid circuits (16, 17).

5. Method according to any one of the preceding claims,
**characterized in that**
the cooling fluid is conducted through the calorically active material element (11, 12), preferably **in that** the cooling fluid is conducted through at least one channel (13, 14) in the calorically active material element (11, 12).

6. Method according to any one of the preceding claims,
**characterized in that**
the working fluid is used as cooling fluid, in particular **in that** a fluid return of the working fluid from the hot-side reservoir (2) to the cold-side reservoir (3) is conducted as cooling fluid through the calorically active material element (11, 12) or past the calorically active material element (11, 12), such that cooling fluid and calorically active material of the calorically active material element (11, 12) are operatively connected and/or **in that** a fluid connection from the cold-side reservoir (3) is conducted as cooling fluid through the calorically active material element (11, 12) or past the calorically active material element (11, 12), such that cooling fluid and calorically active material of the calorically active material element (11, 12) are operatively connected.

7. Method according to any one of the preceding claims,
**characterized in that**
the calorically active material is exposed to the mechanical stress field, wherein the mechanical stress field is generated in the calorically active material in the form of a mechanical stress, preferably by tensile and/or compressive loading of the calorically active material, shearing and/or compression of the calorically active material, wherein a temperature change of the calorically active material is generated by the tensile and/or compressive loading of the calorically active material, and/or **in that** the calorically active material is exposed to the electric field, wherein the electric field is generated by means of an electrical condenser, wherein a temperature change of the calorically active material is generated by the electric field, and/or **in that** the calorically active material is exposed to the magnetic field, wherein the magnetic field is generated by means of a permanent magnet, preferably by means of a movable permanent magnet, wherein a temperature change of the calorically active material is generated by the magnetic field.

8. Method according to claim 7,
**characterized in that**
a transport means for the working fluid and/or the cooling fluid, in particular in the form of a compressor, is driven by a stroke produced by the means for generating the mechanical stress field.

9. Device in the form of a cyclic-process-based system with a hot-side reservoir (2) and a cold-side reservoir (3) and at least one fluid chamber (4, 5), with an evaporator region and a condenser region for a working fluid and at least one
heat-exchanger unit for a cyclic-process-based system, in particular for a heat pump and/or a cooling device and/or a heat engine, which heat-exchanger unit comprises at least one calorically active material element (11, 12) with calorically active material and the device comprises means for activating and deactivating an electric field and/or magnetic field and/or mechanical stress field and the calorically active material is arranged in an interaction region of the electric field and/or magnetic field and/or mechanical stress field, wherein the calorically active material is arranged in the fluid chamber and is arranged in operative connection with a working fluid, such that heat can be transferred between working fluid and calorically active material and the heat transfer between working fluid and calorically active material takes place substantially by means of latent heat transfer in the form of evaporation heat and condensation heat,
**characterized in that**
the heat-exchanger unit comprises a regulation device for controlling or regulating a base temperature of the calorically active material element by means of a cooling fluid, wherein the base temperature is a temperature of the calorically active material without field application.

10. Device according to claim 9,
**characterized in that**
the regulation device is designed as at least one fluid channel (13, 14) for a cooling fluid operatively connected to the calorically active material, in particular running on the calorically active material or through the calorically active material.

11. Device according to claim 9 or 10,
**characterized in that**
the cooling fluid is water, alcohol, butane, propane, CO₂, NH₃ and/or a mixture of the aforementioned fluids.

12. Device according to any one of claims 9 to 11,
**characterized in that**
the regulation device comprises at least one pump (18) for pumping the cooling fluid and/or a throttle (23).

13. Device according to any one of claims 9 to 12,
**characterized in that**
the working fluid is used as the cooling fluid, in particular **in that** a fluid return (15) of the cyclic-process-based system is arranged and configured such that the working fluid in the fluid return (15) is brought into operative connection with the calorically active material.

14. Device according to any one of claims 9 to 13,
**characterized in that**
a fluid return (15) of the cyclic-process-based system is arranged and configured such that the working fluid is guided to the calorically active material by means of the fluid return (15), such that wetting of a surface of the calorically active material takes place in the fluid chamber.

15. Device according to any one of claims 9 to 14,
**characterized in that**
a liquid circuit (16) for the working fluid and a liquid circuit (17) for the cooling fluid are provided, in particular so as to be spatially separated.

## Revendications

1. Procédé de fonctionnement de systèmes basés sur un processus cyclique avec un réservoir côté chaud (2) et un réservoir côté froid (3) et au moins une chambre de fluide (4, 5), une zone d'évaporateur et une zone de condensateur pour un fluide de travail et au moins une unité d'échangeur de chaleur avec au moins un élément de matériau (11, 12) à effet calorique, dans lequel l'élément de matériau (11, 12) à effet calorique est agencé dans la chambre de fluide (4, 5) directement ou indirectement en liaison active avec le fluide de travail, et un échange de chaleur entre le matériau à effet calorique de l'élément de matériau (11, 12) à effet calorique et le fluide de travail est effectué au moyen de l'échange de chaleur latent,
comprenant les étapes de procédé suivantes :
A Activation d'un champ électrique et/ou champ magnétique et/ou champ de tension mécanique de sorte que le matériau à effet calorique soit exposé au moins temporairement à une interaction avec le champ électrique et/ou champ magnétique et/ou champ de tension mécanique cité ;
B Évaporation du fluide de travail par chauffage du matériau à effet calorique par une première modification de température induite dans l'étape de procédé A du matériau à effet calorique au-dessus d'une température de base, dans lequel la température de base est une température du matériau à effet calorique sans application de champ ;
C Évacuation du fluide de travail vers le réservoir côté chaud (2) et condensation du fluide de travail au niveau de la zone de condensateur, dans lequel de la chaleur est transportée au moyen de la chaleur latente du fluide de travail évaporé ;
D Retour du fluide de travail condensé depuis la zone de condensateur à la zone d'évaporateur ;
E Désactivation du champ électrique et/ou magnétique et/ou élastique ;
F Seconde modification de température opposée du matériau à effet calorique sous la température de base ;
G Amenée du fluide de travail depuis le réservoir côté froid (3) dans la chambre de fluide, dans lequel de la chaleur est transportée au moyen de la chaleur latente du fluide de travail évaporé depuis la zone d'évaporateur dans la chambre de fluide ;
**caractérisé en ce que**
la température de base de l'élément de matériau à effet calorique est commandée ou régulée au moyen d'un fluide de refroidissement.

2. Procédé selon la revendication 1,
**caractérisé en ce que**
le procédé est répété en particulier **en ce qu'**une pluralité de chambres de fluide (4, 5) sont montées en série ou en parallèle de sorte que le fluide de travail s'écoule à travers les chambres de fluide (4, 5) montées en série ou en parallèle et le procédé est répété de manière cyclique dans les chambres de fluide montées en série ou en parallèle.

3. Procédé selon l'une quelconque des revendications précédentes,
**caractérisé en ce que**
la température de base de l'élément de matériau (11, 12) à effet calorique est adaptée au moyen du fluide de refroidissement à une température de travail idéale pour le matériau à effet calorique, en particulier **en ce qu'**une pluralité de chambres de fluide (4, 5) sont montées en série ou en parallèle, et la température de base de l'élément de matériau (11, 12) à effet calorique des chambres de fluide (4, 5) montées en série ou en parallèle est adaptée respectivement à une température de travail idéale pour le matériau à effet calorique de la chambre de fluide (4, 5) respective.

4. Procédé selon l'une quelconque des revendications précédentes,
**caractérisé en ce que**
le fluide de travail et le fluide de refroidissement sont séparés spatialement, en particulier **en ce que** le fluide de travail et le fluide de refroidissement circulent dans deux circuits de liquide (16, 17) séparés.

5. Procédé selon l'une quelconque des revendications précédentes,
**caractérisé en ce que**
le fluide de refroidissement est acheminé par l'élément de matériau (11, 12) à effet calorique, de préférence **en ce que** le fluide de refroidissement est acheminé par au moins un canal (13, 14) dans l'élément de matériau (11, 12) à effet calorique.

6. Procédé selon l'une quelconque des revendications précédentes,
**caractérisé en ce que**
le fluide de travail est utilisé comme fluide de refroidissement, en particulier **en ce qu'**un retour de fluide du fluide de travail depuis le réservoir côté chaud (2) au réservoir côté froid (3) comme fluide de refroidissement passe par l'élément de matériau (11, 12) à effet calorique ou devant l'élément de matériau (11, 12) à effet calorique de sorte que le fluide de refroidissement et le matériau à effet calorique de l'élément de matériau (11, 12) à effet calorique soient en liaison active et/ou **en ce qu'**une liaison de fluide depuis le réservoir côté froid (3) comme fluide de refroidissement passe par l'élément de matériau (11, 12) à effet calorique ou devant l'élément de matériau (11, 12) à effet calorique de sorte que le fluide de refroidissement et le matériau à effet calorique de l'élément de matériau (11, 12) à effet calorique soient en liaison active.

7. Procédé selon l'une quelconque des revendications précédentes,
**caractérisé en ce que**
le matériau à effet calorique est exposé au champ de tension mécanique, dans lequel le champ de tension mécanique est généré sous la forme d'une tension mécanique dans le matériau à effet calorique, de préférence par un effort en traction et/ou pression du matériau à effet calorique, un cisaillement et/ou une compression du matériau à effet calorique, dans lequel une modification de température du matériau à effet calorique est générée par l'effort en traction et/ou pression du matériau à effet calorique et/ou **en ce que** le matériau à effet calorique est exposé au champ électrique, dans lequel le champ électrique est généré au moyen d'un condensateur électrique, dans lequel une modification de température du matériau à effet calorique est générée par le champ électrique et/ou **en ce que** le matériau à effet calorique est exposé au champ magnétique, dans lequel le champ magnétique est généré au moyen d'un aimant permanent, de préférence au moyen d'un aimant permanent mobile, dans lequel une modification de température du matériau à effet calorique est générée par le champ magnétique.

8. Procédé selon la revendication 7,
**caractérisé en ce que**
un moyen de transport pour le fluide de travail et/ou le fluide de refroidissement est entraîné en particulier sous la forme d'un compresseur par un moyeu qui est produit par les moyens de génération du champ de tension mécanique.

9. Dispositif sous la forme d'un système basé sur un processus cyclique avec un réservoir côté chaud (2) et un réservoir côté froid (3) et au moins une chambre de fluide (4, 5), une zone d'évaporateur et une zone de condensateur pour un fluide de travail et au moins une
unité d'échangeur de chaleur pour un système basé sur un processus cyclique, en particulier pour une pompe à chaleur et/ou un dispositif de refroidissement et/ou un moteur thermique, laquelle unité d'échangeur de chaleur comprend au moins un élément de matériau (11, 12) à effet calorique avec un matériau à effet calorique, et le dispositif comprend des moyens d'activation et de désactivation d'un champ électrique et/ou champ magnétique et/ou champ de tension mécanique, et le matériau à effet calorique est disposé dans une zone d'interaction du champ électrique et/ou champ magnétique et/ou champ de tension mécanique, dans lequel le matériau à effet calorique est disposé dans la chambre de fluide et est disposé en liaison active avec un fluide de travail de sorte que de la chaleur puisse être transmise entre le fluide de travail et le matériau à effet calorique, et l'échange de chaleur est effectué entre le fluide de travail et le matériau à effet calorique sensiblement au moyen de l'échange de chaleur latent sous la forme de chaleur d'évaporation et de condensation,
**caractérisé en ce que**
l'unité d'échangeur de chaleur comprend un dispositif de régulation pour la commande ou la régulation d'une température de base de l'élément de matériau à effet calorique au moyen d'un fluide de refroidissement, dans lequel la température de base est une température du matériau à effet calorique sans activation de champ.

10. Dispositif selon la revendication 9,
**caractérisé en ce que**
le dispositif de régulation est formé comme au moins un canal de fluide (13, 14) pour un fluide de refroidissement en liaison active avec le matériau à effet calorique, en particulier au niveau du matériau à effet calorique ou s'étendant à travers le matériau à effet calorique.

11. Dispositif selon la revendication 9 ou 10,
**caractérisé en ce que**
le fluide de refroidissement est de l'eau, de l'alcool, du butane, du propane, du CO₂, du NH₃ et/ou un mélange des fluides précités.

12. Dispositif selon l'une quelconque des revendications 9 à 11,
**caractérisé en ce que**
le dispositif de régulation comprend au moins une pompe (18) pour pomper le fluide de refroidissement et/ou un étranglement (23).

13. Dispositif selon l'une quelconque des revendications 9 à 12,
**caractérisé en ce que**
le fluide de travail est utilisé comme fluide de refroidissement, en particulier **en ce qu'**un retour de fluide (15) du système basé sur un processus cyclique est agencé et configuré de telle manière que le fluide de travail dans le retour de fluide (15) soit amené en liaison active avec le matériau à effet calorique.

14. Dispositif selon l'une quelconque des revendications 9 à 13,
**caractérisé en ce que**
un retour de fluide (15) du système basé sur un processus cyclique est agencé et configuré de telle manière que le fluide de travail soit guidé au moyen du retour de fluide (15) vers le matériau à effet calorique de sorte qu'une humidification d'une surface du matériau à effet calorique soit effectuée dans la chambre de fluide.

15. Dispositif selon l'une quelconque des revendications 9 à 14,
**caractérisé en ce que**
un circuit de liquide (16) pour le fluide de travail et un circuit de liquide (17) pour le fluide de refroidissement sont prévus, en particulier de manière à être séparés dans l'espace.
